# EUROPEAN PATENT APPLICATION

(11) **EP 4 694 088 A1**
(43) Date of publication of application: **11.02.2026**
(21) Application number: 24861587.4
(22) Date of filing: 11.06.2024
(51) Int. Cl.: H04L 67/1095

(54) **DATA SYNCHRONIZATION METHOD, ELECTRONIC DEVICE, AND SYSTEM**

(30) Priority: 06.09.2023 CN 202311162897
(71) Applicant: Huawei Technologies Co., Ltd., Shenzhen, Guangdong 518129 (CN)
(72) Inventor: GONG, Ashi, Shenzhen, Guangdong 518129 (CN); DAI, Zhicheng, Shenzhen, Guangdong 518129 (CN); DING, Hao, Shenzhen, Guangdong 518129 (CN)
(74) Representative: MERH-IP Matias Erny Reichl Hoffmann Patentanwälte PartG mbB
(86) International application number: PCT/CN2024/098507
(87) International publication number: WO 2025/050739

(57) **Abstract**

This application provides a data synchronization method and system, and an electronic device, and relates to the field of terminal technologies. In this application, after generating to-be-synchronized data, the electronic device separately synchronizes procedural data and persistent data based on a data type of the to-be-synchronized data. Therefore, stability of data synchronization is ensured while ensuring timeliness of data synchronization. The method includes: in a process of displaying an interface of a first application, a first electronic device receives a first operation of a user for the first application, and obtains first data and second data that are of the first application and that are generated based on the first operation. The first data is data that is not saved to a storage module of the first electronic device, and the second data is data that has been saved to the storage module of the first electronic device. The first electronic device sends the first data to a second electronic device, and sends the second data to a cloud server.

## Description

This application claims priority to Chinese Patent Application No. 202311162897.3, filed with the China National Intellectual Property Administration on September 6, 2023 and entitled "DATA SYNCHRONIZATION METHOD AND SYSTEM, AND ELECTRONIC DEVICE", which is incorporated herein by reference in its entirety.

### TECHNICAL FIELD

This application relates to the field of terminal technologies, and in particular, to a data synchronization method and system, and an electronic device.

### BACKGROUND

With development of terminal technologies, electronic devices can establish connections to a plurality of types of other electronic devices, to form a distributed communication system. In the distributed communication system, the electronic device can implement data synchronization with the other devices, to ensure data consistency between a plurality of electronic devices.

For example, in a process of running a notes application, a mobile phone updates content of the notes application in response to an edit operation of a user. Then, the mobile phone sends updated note content to a tablet via a cloud server in a device-to-cloud synchronization mode. In this way, after the tablet starts a notes application in response to a user operation, displayed note content is latest note content edited by the user on the mobile phone, which is convenient for the user to use.

However, in the foregoing process, data synchronization is performed between different electronic devices in the device-to-cloud synchronization mode, and it is difficult to ensure timeliness of data synchronization. Consequently, user experience is affected.

### SUMMARY

To resolve the foregoing technical problem, this application provides a data synchronization method and system, and an electronic device. According to technical solutions provided in this application, after generating to-be-synchronized data, the electronic device separately synchronizes procedural data and persistent data based on a data type of the to-be-synchronized data. Therefore, stability of data synchronization is ensured while ensuring timeliness of data synchronization.

To achieve the foregoing technical objective, this application provides the following technical solutions:
According to a first aspect, a data synchronization method is provided, and is applied to a first electronic device. The method includes: displaying an interface of a first application; receiving a first operation of a user for the first application, and obtaining first data and second data that are of the first application and that are generated based on the first operation, where the first data is data that is not saved to a storage module of the first electronic device, and the second data is data that has been saved to the storage module; and sending the first data to a second electronic device, and sending the second data to a cloud server.

In some examples, a data type includes, for example, procedural data and persistent data. The first electronic device may distinguish between the procedural data and the persistent data based on whether generated data is saved to the storage module. For example, after the first electronic device saves the generated data to the storage module, the data in the storage module is the persistent data, and data that is not saved to the storage module by the first electronic device is the procedural data. In some examples, the storage module is a storage medium that can store data. The storage module is, for example, a read-only memory ROM, for example, a hard disk, a hard disk drive, a solid-state drive, or a magnetic disk.

In this way, data synchronization between different devices may be flexibly implemented between the first electronic device and the second electronic device based on the data type in a plurality of data synchronization modes such as procedural data device-to-device synchronization and persistent data device-to-cloud synchronization. This ensures stability of data synchronization while ensuing timeliness of data synchronization.

According to the first aspect, sending the first data to the second electronic device includes: sending the first data to the second electronic device in a short-range communication mode, where the short-range communication mode includes at least one of a Bluetooth point-to-point P2P connection communication mode, a wireless fidelity Wi-Fi P2P communication mode, and a local area network communication mode.

In this way, after obtaining the procedural data (that is, the first data), the first electronic device directly sends the procedural data to the second electronic device. Efficiency of data synchronization is improved in a device-to-device synchronization mode.

According to any one of the first aspect or the foregoing implementations of the first aspect, the method further includes: receiving a second operation of the user for the first application, and obtaining fourth data that is of the first application and that is generated based on the second operation, where the fourth data is data that has been saved to the storage module; and sending the fourth data to the second electronic device under a preset condition, where the preset condition includes one or more of the following: sending the fourth data to the cloud server fails, a cloud synchronization function is not enabled, a cloud space capacity is insufficient, and a priority of device-to-device synchronization is higher than a priority of device-to-cloud synchronization.

In this way, the persistent data is synchronized between the first electronic device and the second electronic device in the device-to-device synchronization mode based on a requirement. This avoids affecting use of the user due to a data synchronization exception caused by a failure in performing device-to-cloud synchronization.

In addition, in some scenarios, device-to-device synchronization can obtain a better data synchronization benefit. Therefore, the first electronic device may directly select to synchronize the persistent data in the device-to-device synchronization mode. For example, the first electronic device determines, based on a factor like a current network status, that device-to-device synchronization efficiency is higher than device-to-cloud synchronization efficiency, and the first electronic device may send all the data (including the procedural data and the persistent data) to the second electronic device in the device-to-device synchronization mode.

According to any one of the first aspect or the foregoing implementations of the first aspect, the method further includes: receiving a third operation of the user for the first application, and obtaining seventh data that is of the first application and that is generated based on the third operation, where the seventh data is data that has been saved to the storage module, and a data amount of the seventh data is greater than a preset threshold; and sending first information of the seventh data to the second electronic device under the preset condition, where the first information includes a storage address and/or thumbnail information of the seventh data.

For example, in a process of synchronizing the persistent data with the second electronic device in a device-to-device manner based on a requirement, the first electronic device determines that an amount of newly added picture data in a notes application is small, and may directly perform attachment synchronization in the device-to-device synchronization mode; and the first electronic device determines that an amount of newly added video data in the notes application is large, and may synchronize an address of a video in the device-to-device synchronization mode. Subsequently, after obtaining persistent data of the notes application from the cloud server, the second electronic device may discard a picture that has been synchronized, and save a video whose attachment content is not synchronized.

In this way, the first electronic device may synchronize the persistent data with the second electronic device in a device-to-device manner based on a data amount status. Therefore, device-to-device synchronization efficiency of the persistent data is improved.

According to any one of the first aspect or the foregoing implementations of the first aspect, the method further includes: receiving a data save operation of the user or detecting that a data save cycle is met, and saving the first data to the storage module; and sending the first data in the storage module to the cloud server.

For example, the first electronic device saves the procedural data to the storage module in response to a user operation. In this case, the procedural data becomes the persistent data. The first electronic device sends the persistent data to the cloud server based on a preset cycle or after determining that the persistent data is obtained.

For another example, the first application is configured with an automatic save function, and the first application automatically saves the procedural data based on a preset cycle. In this case, after obtaining persistent data that is newly saved to the storage module, the first electronic device may send the persistent data to the cloud server.

In this way, the first electronic device classifies the procedural data and the persistent data based on whether the data is saved, and synchronizes the procedural data and the persistent data in different manners. Therefore, stability of data synchronization is ensured while ensuring timeliness of data synchronization.

According to a second aspect, a data synchronization method is provided, and is applied to a second electronic device. The method includes: receiving first data sent by a first electronic device; and downloading, from a cloud server, second data sent by the first electronic device to the cloud server, where the first data and the second data are data generated by a first application in the first electronic device, the first data is data that is not saved to a storage module of the first electronic device, and the second data is data that has been saved to the storage module of the first electronic device.

According to the second aspect, receiving the first data sent by the first electronic device includes: receiving the first data sent by the first electronic device in a short-range communication mode, where the short-range communication mode includes at least one of a Bluetooth point-to-point P2P connection communication mode, a wireless fidelity Wi-Fi P2P communication mode, and a local area network communication mode.

According to any one of the second aspect or the foregoing implementations of the second aspect, downloading, from the cloud server, the second data sent by the first electronic device to the cloud server includes: obtaining first data information of third data sent by the cloud server, where the third data includes the second data and data that is in the first data and that has been saved to the storage module; and requesting, based on the first data information from the cloud server, to download the second data that is in the third data and that is not synchronized to the first electronic device in a device-to-device manner.

In this way, a data conflict between different devices is avoided while consistency between data in the second electronic device and data in the first electronic device is ensured.

According to any one of the second aspect or the foregoing implementations of the second aspect, the method further includes: receiving fourth data sent by the second electronic device under a preset condition, where the fourth data is data that has been saved to the storage module by the first electronic device; and the preset condition includes one or more of the following: the first electronic device fails to send the fourth data to the cloud server, the first electronic device does not enable a cloud synchronization function, a cloud space capacity is insufficient, and a priority of device-to-device synchronization is higher than a priority of device-to-cloud synchronization.

According to any one of the second aspect or the foregoing implementations of the second aspect, the method further includes: receiving second data information of fifth data sent by the cloud server, where the fifth data is data that is of the first application and that is sent by the first electronic device to the cloud server; and requesting, based on the second data information from the cloud server, to download sixth data that is in the fifth data and that is not synchronized to the first electronic device in a device-to-device manner, where the sixth data does not include the fourth data.

In this way, the second electronic device pulls data from the cloud server based on an actual data synchronization status and a requirement, and does not need to repeatedly download data that has been synchronized.

According to any one of the second aspect or the foregoing implementations of the second aspect, the method further includes: receiving first information of seventh data sent by the first electronic device under the preset condition, where the seventh data is data that has been saved to the storage module by the first electronic device, a data amount of the seventh data is greater than a preset threshold, and the first information includes a storage address and/or thumbnail information of the seventh data.

According to a third aspect, a first electronic device is provided. The first electronic device includes a processor, a memory, and a display. The memory and the display are coupled to the processor. The memory is configured to store computer program code, and the computer program code includes computer instructions. When the processor reads the computer instructions from the memory, the first electronic device is enabled to: display an interface of a first application; receive a first operation of a user for the first application, and obtain first data and second data that are of the first application and that are generated based on the first operation, where the first data is data that is not saved to a storage module of the first electronic device, and the second data is data that has been saved to the storage module; and send the first data to a second electronic device, and send the second data to a cloud server.

According to the third aspect, sending first data to the second electronic device includes: sending the first data to the second electronic device in a short-range communication mode, where the short-range communication mode includes at least one of a Bluetooth point-to-point P2P connection communication mode, a wireless fidelity Wi-Fi P2P communication mode, and a local area network communication mode.

According to any one of the third aspect or the foregoing implementations of the third aspect, when the processor reads the computer instructions from the memory, the first electronic device is further enabled to: receive a second operation of the user for the first application, and obtain fourth data that is of the first application and that is generated based on the second operation, where the fourth data is data that has been saved to the storage module; and send the fourth data to the second electronic device under a preset condition, where the preset condition includes one or more of the following: sending the fourth data to the cloud server fails, a cloud synchronization function is not enabled, a cloud space capacity is insufficient, and a priority of device-to-device synchronization is higher than a priority of device-to-cloud synchronization.

According to any one of the third aspect or the foregoing implementations of the third aspect, when the processor reads the computer instructions from the memory, the first electronic device is further enabled to: receive a third operation of the user for the first application, and obtain seventh data that is of the first application and that is generated based on the third operation, where the seventh data is data that has been saved to the storage module, and a data amount of the seventh data is greater than a preset threshold; and send first information of the seventh data to the second electronic device under the preset condition, where the first information includes a storage address and/or thumbnail information of the seventh data.

According to any one of the third aspect or the foregoing implementations of the third aspect, when the processor reads the computer instructions from the memory, the first electronic device is further enabled to: receive a data save operation of the user or detect that a data save cycle is met, and save the first data to the storage module; and send the first data in the storage module to the cloud server.

According to a fourth aspect, a second electronic device is provided. The second electronic device includes a processor and a memory. The memory is coupled to the processor. The memory is configured to store computer program code, and the computer program code includes computer instructions. When the processor reads the computer instructions from the memory, the second electronic device is enabled to: receive first data sent by a first electronic device; and download, from a cloud server, second data sent by the first electronic device to the cloud server, where the first data and the second data are data generated by a first application in the first electronic device, the first data is data that is not saved to a storage module of the first electronic device, and the second data is data that has been saved to the storage module of the first electronic device.

According to the fourth aspect, receiving the first data sent by the first electronic device includes: receiving the first data sent by the first electronic device in a short-range communication mode, where the short-range communication mode includes at least one of a Bluetooth point-to-point P2P connection communication mode, a wireless fidelity Wi-Fi P2P communication mode, and a local area network communication mode.

According to any one of the fourth aspect or the foregoing implementations of the fourth aspect, downloading, from the cloud server, the second data sent by the first electronic device to the cloud server includes: obtaining first data information of third data sent by the cloud server, where the third data includes the second data and data that is in the first data and that has been saved to the storage module; and requesting, based on the first data information from the cloud server, to download the second data that is in the third data and that is not synchronized to the first electronic device in a device-to-device manner.

According to any one of the fourth aspect or the foregoing implementations of the fourth aspect, when the processor reads the computer instructions from the memory, the second electronic device is further enabled to: receive fourth data sent by the first electronic device under a preset condition, where the fourth data is data that has been saved to the storage module by the first electronic device; and the preset condition includes one or more of the following: the first electronic device fails to send the fourth data to the cloud server, the first electronic device does not enable a cloud synchronization function, a cloud space capacity is insufficient, and a priority of device-to-device synchronization is higher than a priority of device-to-cloud synchronization.

According to any one of the fourth aspect or the foregoing implementations of the fourth aspect, when the processor reads the computer instructions from the memory, the second electronic device is further enabled to: receive second data information of fifth data sent by the cloud server, where the fifth data is data that is of the first application and that is sent by the first electronic device to the cloud server; and request, based on the second data information from the cloud server, to download sixth data that is in the fifth data and that is not synchronized to the first electronic device in a device-to-device manner, where the sixth data does not include the fourth data.

According to any one of the fourth aspect or the foregoing implementations of the fourth aspect, when the processor reads the computer instructions from the memory, the second electronic device is further enabled to: receive first information of seventh data sent by the first electronic device under the preset condition, where the seventh data is data that has been saved to the storage module by the first electronic device, a data amount of the seventh data is greater than a preset threshold, and the first information includes a storage address and/or thumbnail information of the seventh data.

According to a fifth aspect, a data synchronization system is provided. The system includes a first electronic device and a second electronic device, and a short-range communication connection is established between the first electronic device and the second electronic device. The first electronic device is configured to: display an interface of a first application; receive a first operation of a user for the first application, and obtain first data and second data that are of the first application and that are generated based on the first operation, where the first data is data that is not saved to a storage module of the first electronic device, and the second data is data that has been saved to the storage module; and send the first data to the second electronic device, and send the second data to a cloud server. The second electronic device is configured to: receive the first data sent by the first electronic device, and download the second data from the cloud server.

According to the fifth aspect, the second electronic device is further configured to: obtain first data information of third data sent by the cloud server, where the third data includes the second data and data that is in the first data and that has been saved to the storage module; and request, based on the first data information from the cloud server, to download the second data that is in the third data and that is not synchronized to the first electronic device in a device-to-device manner.

According to any one of the fifth aspect or the foregoing implementations of the fifth aspect, the first electronic device is further configured to: receive a second operation of the user for the first application, and obtain fourth data that is of the first application and that is generated based on the second operation, where the fourth data is data that has been saved to the storage module; and send the fourth data to the second electronic device under a preset condition, where the preset condition includes one or more of the following: sending the fourth data to the cloud server fails, a cloud synchronization function is not enabled, a cloud space capacity is insufficient, and a priority of device-to-device synchronization is higher than a priority of device-to-cloud synchronization. The second electronic device is further configured to receive the fourth data sent by the first electronic device.

According to any one of the fifth aspect or the foregoing implementations of the fifth aspect, the second electronic device is further configured to: receive second data information of fifth data sent by the cloud server, where the fifth data is data that is of the first application and that is sent by the first electronic device to the cloud server; and request, based on the second data information from the cloud server, to download sixth data that is in the fifth data and that is not synchronized to the first electronic device in a device-to-device manner, where the sixth data does not include the fourth data.

According to a sixth aspect, an electronic device is provided. The electronic device has a function of implementing the data synchronization method according to any one of the first aspect and the possible implementations of the first aspect, or the electronic device has a function of implementing the data synchronization method according to any one of the second aspect and the possible implementations of the second aspect. The function may be implemented by hardware, or may be implemented by hardware executing corresponding software. The hardware or the software includes one or more modules corresponding to the function.

According to a seventh aspect, a computer-readable storage medium is provided. The computer-readable storage medium stores a computer program (which may also be referred to as instructions or code). When the computer program is executed by an electronic device, the electronic device is enabled to perform the method according to any one of the first aspect or the implementations of the first aspect, or the electronic device is enabled to perform the method according to any one of second aspect or the implementations of the second aspect.

According to an eighth aspect, a computer program product is provided. When the computer program product runs on an electronic device, the electronic device is enabled to perform the method according to any one of the first aspect or the implementations of the first aspect, or the electronic device is enabled to perform the method according to any one of second aspect or the implementations of the second aspect.

According to a ninth aspect, a circuit system is provided. The circuit system includes a processing circuit. The processing circuit is configured to perform the method according to any one of the first aspect or the implementations of the first aspect, or the processing circuit is configured to perform the method according to any one of second aspect or the implementations of the second aspect.

According to a tenth aspect, a chip system is provided, including at least one processor and at least one interface circuit. The at least one interface circuit is configured to: perform a transceiver function; and send instructions to the at least one processor. When the at least one processor executes the instructions, the at least one processor performs the method according to any one of the first aspect or the implementations of the first aspect; or the at least one processor performs the method according to any one of the second aspect or the implementations of the second aspect.

For technical effect of the foregoing aspects, refer to each other. Details are not described herein again.

### BRIEF DESCRIPTION OF DRAWINGS

FIG. 1 is a diagram of a device-to-cloud data synchronization scenario according to an embodiment of this application;
FIG. 2 is a diagram of a device-to-device data synchronization scenario according to an embodiment of this application;
FIG. 3 is a diagram of a communication system to which a data synchronization method provided in embodiments of this application is applied;
FIG. 4 is a diagram of a hardware structure of a first electronic device according to an embodiment of this application;
FIG. 5 is a block diagram of a software structure according to an embodiment of this application;
FIG. 6 is a diagram of a procedural data device-to-device data synchronization scenario according to an embodiment of this application;
FIG. 7 is a diagram of a persistent data device-to-cloud data synchronization scenario according to an embodiment of this application;
FIG. 8 is a diagram 1 of a persistent data on-demand device-to-device data synchronization scenario according to an embodiment of this application;
FIG. 9 is a diagram 2 of a persistent data on-demand device-to-device data synchronization scenario according to an embodiment of this application;
FIG. 10 is a diagram of a scenario in which data synchronization is adaptively performed based on a data type and a data synchronization scenario according to an embodiment of this application;
FIG. 11 is a schematic flowchart of a data synchronization method according to an embodiment of this application;
FIG. 12 is a diagram of a structure of a first electronic device according to an embodiment of this application; and
FIG. 13 is a diagram of a structure of a second electronic device according to an embodiment of this application.

### DESCRIPTION OF EMBODIMENTS

The following describes technical solutions in embodiments of this application with reference to accompanying drawings in embodiments of this application. In descriptions of embodiments of this application, terms used in the following embodiments are merely intended to describe specific embodiments, but not to limit this application. The terms "one", "a", "the", "the foregoing", and "this" of singular forms used in this specification and the appended claims of this application are intended to include expressions such as "one or more", unless otherwise specified in the context clearly. It should be further understood that, in the following embodiments of this application, "at least one" and "one or more" mean one or more (including two).

Reference to "an embodiment", "some embodiments", or the like described in this specification means that one or more embodiments of this application include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner. The term "connection" includes a direct connection and an indirect connection, unless otherwise specified. "First" and "second" are merely intended for a purpose of description, and shall not be understood as an indication or implication of relative importance or implicit indication of a quantity of indicated technical features.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

In some embodiments, data synchronization may be performed between a plurality of electronic devices in a distributed communication system in a device-to-cloud synchronization mode. Therefore, data consistency between the plurality of devices is ensured.

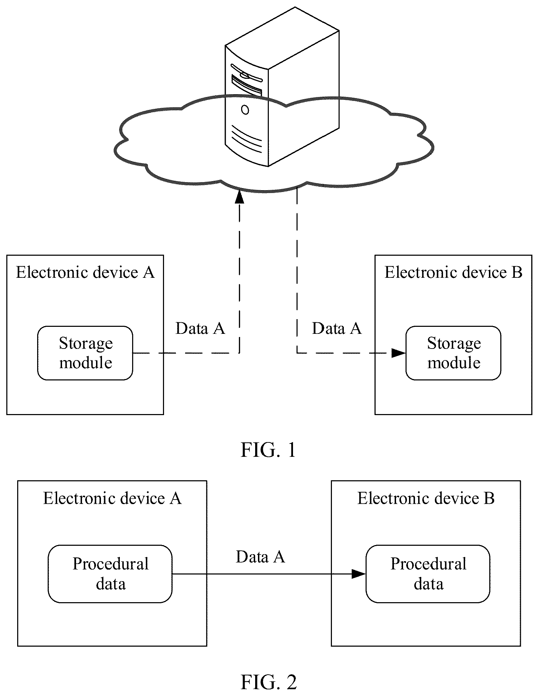

For example, as shown in FIG. 1, in a process of running a notes application, an electronic device A updates content of the notes application in response to an edit operation of a user, and saves updated note content to a storage module. Then, the electronic device A sends the note content (that is, the data A) in the storage module to a cloud server in a device-to-cloud synchronization mode. In this case, an electronic device B may download the note content from the cloud server. In this way, after the electronic device B starts a notes application in response to a user operation, displayed note content is latest note content edited by the user on the electronic device A, which is convenient for the user to use.

However, in the foregoing process, data synchronization is performed between different electronic devices in the device-to-cloud synchronization mode, and it is difficult to ensure timeliness of data synchronization. Consequently, user experience is affected. For example, when a mobile phone determines that updated note content needs to be sent to the cloud server, current network quality is so poor that the sending fails. In this case, in this process, because the mobile phone fails to upload the updated note content to the cloud server, a tablet also fails to obtain the latest note content. In this case, if the user starts a notes application on a tablet side, the user cannot view the latest notes application content.

In addition, a cloud synchronization function is not configured or enabled for a part of electronic devices. As a result, the electronic devices cannot perform data synchronization with another device in the device-to-cloud synchronization mode. Alternatively, the part of electronic devices can perform cloud data synchronization only when using a wireless network due to a user setting, and cannot perform cloud data synchronization when using operator data traffic. Consequently, timeliness of data synchronization is affected.

In other embodiments, data synchronization may be performed between a plurality of electronic devices in a distributed communication system in a device-to-device synchronization mode. Therefore, data consistency between the plurality of devices is ensured.

For example, as shown in FIG. 2, in a process of running a notes application, an electronic device A updates note content in response to an edit operation of a user, and generates procedural data of the notes application. In this process, the electronic device A detects a nearby electronic device B, and establishes a communication connection to the electronic device B. In this case, the electronic device A may synchronize, to the electronic device B in real time, the updated procedural data (that is, data A) of the notes application. In this way, after the electronic device B starts a notes application in response to a user operation, the latest note content edited by the user on the electronic device A can be displayed in real time, which is convenient for the user to use.

However, in the foregoing process, because stability of a device-to-device connection between the devices is poor, the connection is easily interrupted. In addition, a data transmission speed is low, which affects efficiency of performing data synchronization between different electronic devices in a device-to-device synchronization mode.

In addition, the electronic device can perform device-to-device data synchronization only when using a wireless network, and cannot perform device-to-device data synchronization when using operator data traffic. Consequently, timeliness of data synchronization is affected.

In still other embodiments, cursor synchronization is performed between different electronic devices through device-to-device data synchronization, and other data is synchronized in the device-to-cloud synchronization mode. In this case, in this solution, the foregoing technical problem still exists.

In view of this, an embodiment of this application provides a data synchronization method. After generating to-be-synchronized data, an electronic device separately synchronizes procedural data and persistent data based on a data type of the to-be-synchronized data. Therefore, stability of data synchronization is ensured while ensuring timeliness of data synchronization.

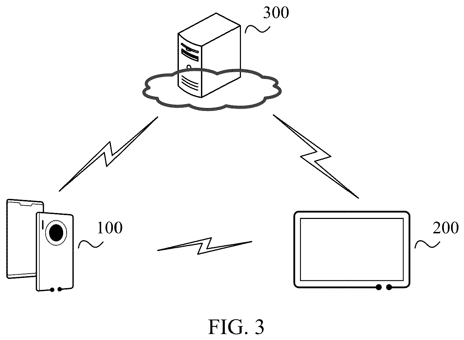

FIG. 3 is a diagram of a communication system to which the data synchronization method provided in embodiments of this application is applied. As shown in FIG. 3, the communication system includes a first electronic device 100, a second electronic device 200, and a server 300.

Optionally, the first electronic device 100 or the second electronic device 200 may be, for example, a terminal device like a mobile phone, a tablet computer, a notebook computer, a smart screen, a wearable device, a vehicle-mounted terminal, an ultra-mobile personal computer (ultra-mobile personal computer, UMPC), a netbook, a personal digital assistant (personal digital assistant, PDA), or an artificial intelligence (artificial intelligence, AI) device. An operating system installed on the first electronic device 100 or the second electronic device 200 includes but is not limited to iOS^{®}, Android^{®}, HarmonyOS^{®}, Windows^{®}, Linux^{®}, or another operating system. A specific type of the first electronic device 100 or the second electronic device 200 and the operating system installed on the first electronic device 100 or the second electronic device 200 are not limited in this application.

Optionally, the server 300 may be a device or a server with a computing function, for example, a cloud server or a network server. The server may be one server, a server cluster including a plurality of servers, or a cloud computing service center.

In some embodiments, the first electronic device 100 is an electronic device that generates to-be-synchronized data, and the second electronic device 200 is an electronic device that is to perform data synchronization. After generating the to-be-synchronized data, the first electronic device 100 determines a data type, sends procedural data to the second electronic device 200 in a device-to-device synchronization mode, and sends persistent data to the second electronic device 200 in a device-to-cloud synchronization mode.

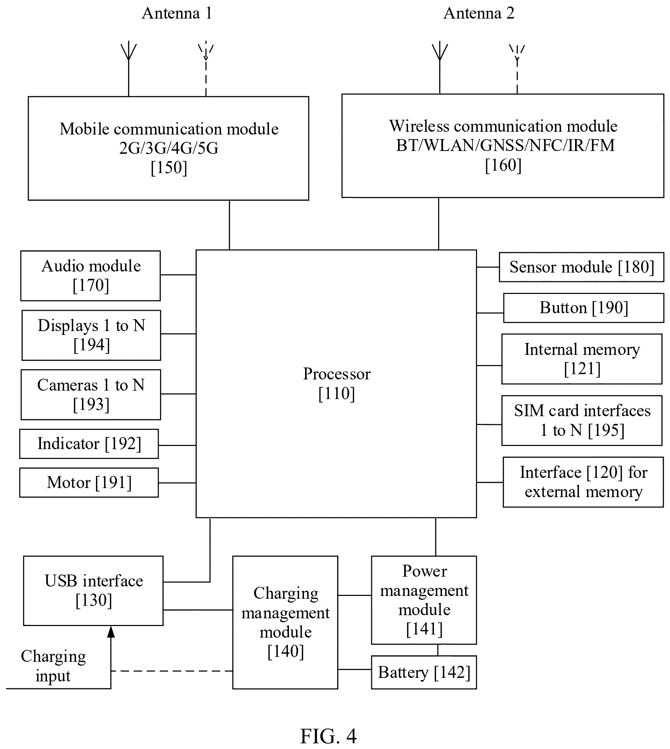

Optionally, the first electronic device 100 and the second electronic device 200 in embodiments of this application may be implemented by using a same device or different devices, and the different devices may have same, similar, or different hardware structures, for example, a hardware structure shown in FIG. 4.

For example, an example in which the first electronic device 100 has the hardware structure shown in FIG. 4 is used to describe the hardware structure shown in FIG. 4.

As shown in FIG. 4, the first electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a sensor module 180, a button 190, a motor 191, an indicator 192, a camera 193, a display 194, a subscriber identity module (subscriber identification module, SIM) card interface 195, and the like.

It may be understood that the structure shown in this embodiment of this application does not constitute a specific limitation on the first electronic device 100. In other embodiments of this application, the first electronic device 100 may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or is cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, including a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera 193, and the like through different I2C bus interfaces. For example, the processor 110 may be coupled to the touch sensor through the I2C interface, so that the processor 110 communicates with the touch sensor through the I2C bus interface, to implement a touch function of the first electronic device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The USB interface 130 is an interface that conforms to a USB standard specification, and may be specifically a mini USB interface, a micro USB interface, a USB type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another electronic device like an AR device.

It may be understood that, an interface connection relationship between the modules shown in this embodiment of this application is merely an example for description, and does not constitute a structural limitation on the first electronic device 100. In other embodiments of this application, the first electronic device 100 may alternatively use an interface connection mode different from that in the foregoing embodiment, or use a combination of a plurality of interface connection modes.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the first electronic device 100. The charging management module 140 supplies power to the electronic device via the power management module 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In other embodiments, the power management module 141 and the charging management module 140 may alternatively be disposed in a same device.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further reused, to improve antenna utilization. For example, the antenna 1 may be reused as a diversity antenna of a wireless local area network. In other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device, or displays an image or a video through the display 194. In some embodiments, the modem processor may be an independent component. In other embodiments, the modem processor may be independent of the processor 110, and is disposed in a same device as the mobile communication module 150 or another functional module.

The wireless communication module 160 may provide a wireless communication solution that is applied to the first electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the first electronic device 100, the antenna 1 and the mobile communication module 150 are coupled, and the antenna 2 and the wireless communication module 160 are coupled, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The first electronic device 100 implements the display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be made of a liquid crystal display (liquid crystal display, LCD), for example, an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, or a quantum dot light-emitting diode (quantum dot light-emitting diode, QLED). In some embodiments, the first electronic device 100 may include one or N displays 194, where N is a positive integer greater than 1.

The camera 193 is configured to capture a static image or a video. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The interface 120 for external memory may be configured to connect to an external memory card, for example, a micro SD card, to expand a storage capability of the first electronic device 100. The external memory card communicates with the processor 110 through the interface 120 for external memory, to implement a data storage function. For example, files such as music and a video are stored in the external memory card.

The internal memory 121 may be configured to store computer-executable program code, and the executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a non-volatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110. The first electronic device 100 may use the audio module 170 to implement music playing, recording, and the like. The audio module 170 may include a speaker, a receiver, a microphone, a headset jack, an application processor, and the like, to implement an audio function.

The sensor module 180 may include a pressure sensor, a gyro sensor, a barometric pressure sensor, a magnetic sensor, an acceleration sensor, a distance sensor, an optical proximity sensor, a fingerprint sensor, a temperature sensor, a touch sensor, an ambient light sensor, a bone conduction sensor, and the like.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be used for an incoming call vibration prompt, and may also be used for a touch vibration feedback. The motor 191 may also correspond to different vibration feedback effects for touch operations performed on different areas of the display 194. Different application scenarios (for example, a time reminder, information receiving, an alarm clock, and a game) may also correspond to different vibration feedback effects.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100. The first electronic device 100 may support one or N SIM card interfaces, where N is a positive integer greater than 1.

A software system of the first electronic device 100 or the second electronic device 200 may use a layered architecture, an event-driven architecture, a microkernel architecture, a microservice architecture, or a cloud architecture. In embodiments of this application, an Android system with the layered architecture is used as an example to describe a software structure of the first electronic device 100 or the second electronic device 200.

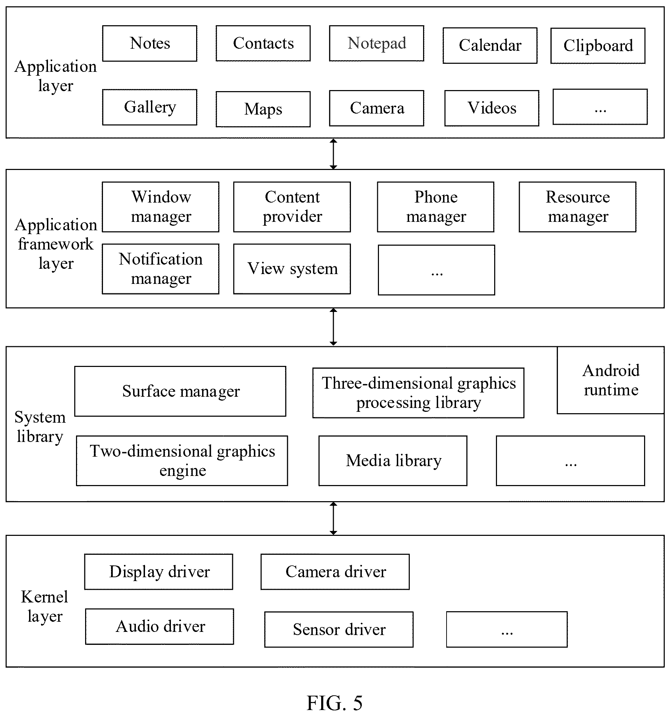

FIG. 5 is a block diagram of the software structure of the first electronic device 100 according to an embodiment of this application. The second electronic device 200 may have a same, similar, or different software structure.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 5, the application package may include applications such as Notes, Contacts, Notepad, Health, Clipboard, Gallery, Maps, Camera, and Videos.

The application framework layer provides an application programming interface (application programming interface, API) and a programming framework for an application at the application layer. The application framework layer includes some predefined functions.

As shown in FIG. 5, the application framework layer may include a window manager, a content provider, a view system, a phone manager, a resource manager, a notification manager, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, audio, calls that are made and received, a browsing history, a bookmark, a phone book, and the like.

The view system includes visual controls such as a control for displaying a text and a control for displaying a picture. The view system may be configured to construct an application. A display interface may include one or more views. For example, a display interface including an SMS message notification icon may include a text display view and a picture display view.

The phone manager is configured to provide a communication function for the first electronic device 100, for example, management of a call status (including answering, declining, or the like).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without requiring user interaction. The notification manager may alternatively be a notification that appears in a top status bar of the system in a form of a graph or scroll bar text.

The Android runtime includes a core library and a virtual machine. The Android runtime is responsible for scheduling and management of the Android system.

The kernel library includes two parts: a function that needs to be invoked in a Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of functional modules, for example, a surface manager (surface manager), a media library (Media Library), a three-dimensional graphics processing library (for example, OpenGL ES), and a two-dimensional graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is used to implement three-dimensional graphics drawing, image rendering, composition, layer processing, and the like.

The two-dimensional graphics engine is a drawing engine for 2D drawing.

The kernel layer is a layer between hardware and software. The kernel layer includes at least a display driver, a camera driver, an audio driver, and a sensor driver.

The following describes, with reference to a note data synchronization scenario, an example of a working procedure of software and hardware of the first electronic device 100 and the second electronic device 200.

In the first electronic device 100, when the touch sensor receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and a control corresponding to the single-tap operation is a control of a notes application icon. A notes application invokes an interface of the application framework layer to start the notes application. Then, in a process of displaying the notes application, the first electronic device 100 detects, via the touch sensor, a touch operation of a user for the notes application, and determines that new data generated by the notes application needs to be synchronized.

Then, if the first electronic device 100 detects the nearby second electronic device 200, and determines to establish a communication connection to the second electronic device 200, the first electronic device 100 may send the newly generated note data to the second electronic device 200, where the newly generated note data is procedural data generated in real time by the notes application in the first electronic device 100. Therefore, data synchronization between notes applications in the first electronic device 100 and the second electronic device 200 is implemented in a device-to-device synchronization mode.

If the first electronic device 100 does not detect the nearby second electronic device 200, the first electronic device 100 may save the newly generated note data to a storage module in response to a save operation of the user. Subsequently, the first electronic device 100 uploads the note data saved to the storage module to a cloud server, where the note data uploaded to the cloud server is persistent data of the notes application in the first electronic device 100. Correspondingly, the second electronic device 200 may obtain the note data through downloading from the cloud server. Therefore, data synchronization between notes applications in the first electronic device 100 and the second electronic device 200 is implemented in a device-to-cloud synchronization mode.

The following describes in detail the data synchronization method provided in embodiments of this application by using an example in which the first electronic device 100 is the electronic device that generates the to-be-synchronized data and the second electronic device 200 is the electronic device that is to perform data synchronization.

In some embodiments, in a process of running an application, an electronic device may generate data of different data types. In some examples, the data type includes, for example, procedural data and persistent data. The electronic device may distinguish between the procedural data and the persistent data based on whether generated data is saved to a storage module. For example, after the electronic device saves the generated data to the storage module, data in the storage module is the persistent data, and data that is not saved to the storage module by the electronic device is the procedural data.

In some examples, the storage module is a storage medium that can store data. The storage module is, for example, a read-only memory (read-only memory, ROM), for example, a hard disk, a hard disk drive, a solid-state drive, or a magnetic disk.

For example, the procedural data includes data such as text content, attachment information, and a cursor location that are generated by the application in real time. The persistent data includes attachments stored in the storage module such as a picture, a video, a document, and text content.

In some embodiments, after generating data, the electronic device separately synchronizes the data of different data types based on the data types. In some examples, the electronic device synchronizes the procedural data with another electronic device in the device-to-device synchronization mode. Therefore, timeliness of procedural data synchronization is ensured. The electronic device synchronizes the persistent data to the another electronic device in the device-to-cloud synchronization mode. Therefore, stability of persistent data synchronization is ensured.

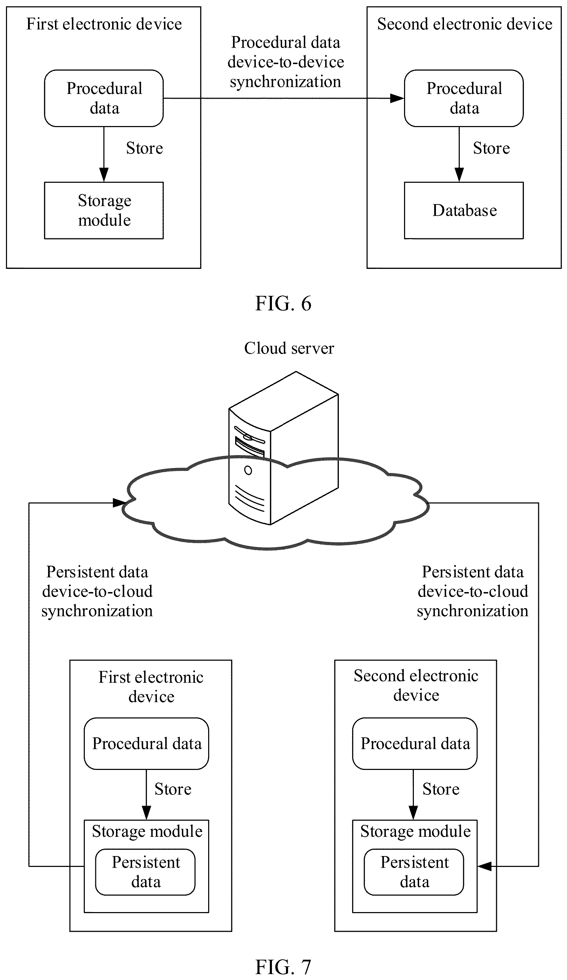

For example, as shown in FIG. 6, in a process of running the notes application, the first electronic device generates new note content in response to a user operation. In this process, the first electronic device detects the nearby second electronic device, and the first electronic device may establish a communication connection to the second electronic device (or a communication connection has been established between the first electronic device and the second electronic device). Then, when updating note content, the first electronic device may send the updated note content to the second electronic device in the device-to-device synchronization mode. In other words, the first electronic device synchronizes procedural data to the second electronic device in the device-to-device synchronization mode. In this way, for example, in the process in which the first electronic device runs the notes application, the second electronic device also runs the notes application. In this case, through device-to-device data synchronization, the second electronic device may synchronously display the note content edited by the user in the notes application in the first electronic device. Alternatively, after the second electronic device starts the notes application in response to a user operation, the second electronic device may display the note content synchronized by the first electronic device in the device-to-device synchronization mode. Therefore, the user may continue to edit the note content via the second electronic device.

For another example, as shown in FIG. 7, the first electronic device saves updated note content to the storage module in response to a save operation of the user. In this case, the storage module stores an attachment of the notes application, and the attachment may include text content, a picture, a video, and the like that are input by the user in the notes application. Then, the first electronic device may upload the attachment of the notes application to the cloud server, to complete persistent data device-to-cloud synchronization of the first electronic device. Subsequently, the second electronic device may download, from the cloud server based on a requirement, the persistent data uploaded by the first electronic device, and save the persistent data to a storage module, to complete persistent data device-to-cloud synchronization of the second electronic device. That is, data synchronization between the first electronic device and the second electronic device is implemented in the device-to-cloud synchronization mode. For example, the second electronic device sends, in response to an operation of indicating to start the notes application by the user, a data synchronization request to the cloud server, where the data synchronization request is used to request to synchronize the note content. After device-to-cloud data synchronization, the second electronic device may display the note content edited by the user on the first electronic device. Therefore, the user may continue to edit the note content via the second electronic device. In this way, regardless of whether the second electronic device is located near the first electronic device, data synchronization can be implemented in the device-to-cloud synchronization mode.

In some embodiments, after generating the persistent data, the electronic device may alternatively perform data synchronization with the another electronic device in the device-to-device synchronization mode based on a requirement.

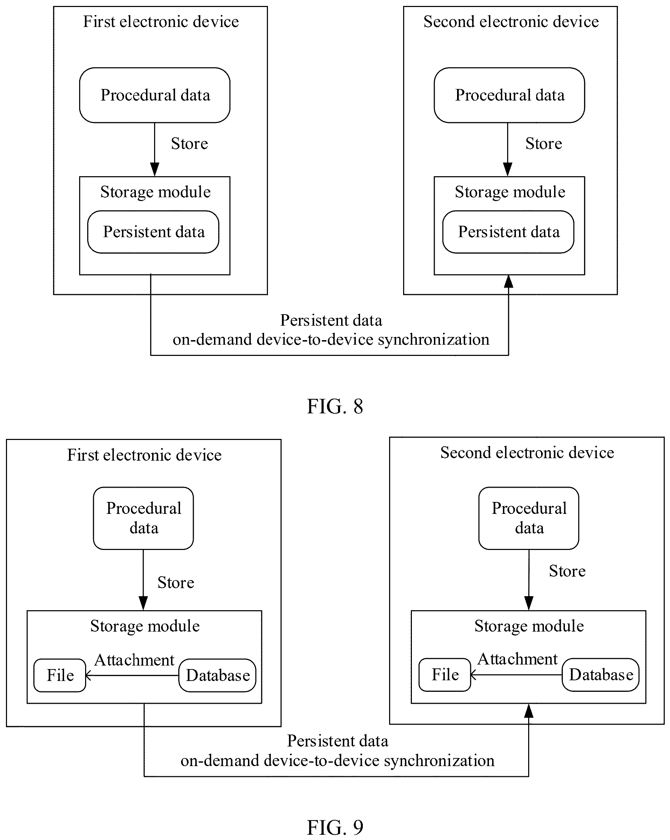

For example, as shown in FIG. 8, in a process of running the notes application, the first electronic device stores, in response to a user operation, generated procedural data of the notes application in the storage module, and generates persistent data of the notes application. When any one or more of the following cases occur, the first electronic device synchronizes the persistent data with another device in the device-to-device synchronization mode based on a requirement. For example, the first electronic device is not configured with a cloud synchronization function, the cloud synchronization function is not enabled, current network quality is so poor that the persistent data cannot be uploaded to the cloud server, a cloud space capacity is insufficient, a wireless communication network function is not enabled or a wireless communication network (for example, a Wi-Fi network) is not accessed, and it is determined that a priority of device-to-device synchronization is higher than a priority of device-to-cloud synchronization. A priority sequence between device-to-device synchronization and device-to-cloud synchronization may be a priority sequence preconfigured in the first electronic device, or may be a priority sequence customized by the user. Different user accounts correspond to different cloud space. After logging in to a user account, the first electronic device may obtain corresponding cloud space for data backup and the like. The cloud space capacity is limited. Therefore, when the cloud space capacity is insufficient, the first electronic device cannot send the persistent data to the cloud server.

It should be understood that in some other requirement scenarios, the first electronic device may alternatively send the persistent data to the second electronic device in the device-to-device synchronization mode based on a requirement. Examples are not enumerated in embodiments of this application. For example, if the first electronic device determines that a peer device (for example, the second electronic device) cannot download the data from the cloud server, the first electronic device may alternatively send the persistent data to the peer device in the device-to-device synchronization mode.

In various cases of the foregoing examples, the first electronic device detects the nearby second electronic device, and the first electronic device may establish the communication connection to the second electronic device (or the communication connection has been established between the first electronic device and the second electronic device). Then, the first electronic device may send, to the second electronic device through the communication connection to the second electronic device, the persistent data that is of the notes application and that has been stored in the storage module. In this way, the persistent data is synchronized between the first electronic device and the second electronic device in the device-to-device synchronization mode based on the requirement. This avoids affecting use of the user due to a data synchronization exception caused by a failure in performing device-to-cloud synchronization.

In some embodiments, a manner of storing the procedural data in the storage module includes storing in a file form and storing in a database form. Storing in the file form indicates that data content of the procedural data is stored. For example, in response to a save operation of the user for the notes application, the electronic device stores, in the storage module in a file form, video content newly added by the user in the notes application. Storing in the database form indicates that a uniform resource locator (uniform resource locator, URL) corresponding to a file in the storage module is stored, and the URL indicates a specific file storage address. For example, after saving video content to the storage module in the file form in response to a save operation of the user, the electronic device determines a URL for a storage address, and stores the URL in the database form. Optionally, a file directory corresponding to the notes application is stored in a database, and the file directory includes one or more URLs that are used to index one or more files of the notes application that have been stored in the storage module.

In some examples, the first electronic device establishes a point-to-point (point-to-point, P2P) connection to the second electronic device in a manner like Bluetooth or Wi-Fi, and implements device-to-device data synchronization through the P2P connection. Generally, a data transmission speed of the P2P connection is low. Therefore, to ensure data synchronization efficiency, when the persistent data needs to be synchronized in a device-to-device manner, a corresponding file (for example, an attachment stored in a file form) for synchronizing the persistent data may be selected, or information for synchronizing the persistent data may be selected. For example, the information includes database content (for example, a URL stored in the database) or thumbnail information (for example, a thumbnail or a video cover) corresponding to the persistent data. In this way, when a data amount of the persistent data is large, the first electronic device and the second electronic device may also implement data synchronization based on the information for synchronizing the persistent data. Subsequently, the second electronic device may also, based on a requirement and the information for synchronizing the persistent data, read the persistent data across devices.

For example, as shown in FIG. 9, after the electronic device stores procedural data in the storage module, stored content includes an attachment stored in the file form and an attachment URL stored in the database form.

In a scenario, in the process of running the notes application, the first electronic device detects an operation of tapping a save control by the user, and saves, to the storage module, text content input by the user. The first electronic device determines that the text content cannot be uploaded to the cloud server currently, and determines that the P2P connection to the nearby second electronic device has been established. In this case, the first electronic device may synchronize the text content to the second electronic device in the device-to-device synchronization mode. The second electronic device saves the text content to the storage module, to complete data synchronization of the notes application.

In another scenario, in the process of running the notes application, the first electronic device detects an operation of tapping a save control by the user, and saves, to the storage module, a video file input by the user. The first electronic device determines that the video file cannot be uploaded to the cloud server currently, and determines that the P2P connection to the nearby second electronic device has been established. Because a data amount of the video file is large, the first electronic device may synchronize cover information and a URL of the video file to the second electronic device in the device-to-device synchronization mode. The second electronic device saves the cover information and the URL of the video file to the storage module, to complete data synchronization of the notes application. Subsequently, the second electronic device starts the notes application in response to a user operation, and may display a cover of the video file. If detecting an operation of tapping the cover of the video file by the user, the second electronic device may request, based on the URL of the video file in a cross-device file reading manner, the first electronic device to obtain a video stream of the video file. Therefore, validity of data synchronization is ensured while ensuing data synchronization efficiency.

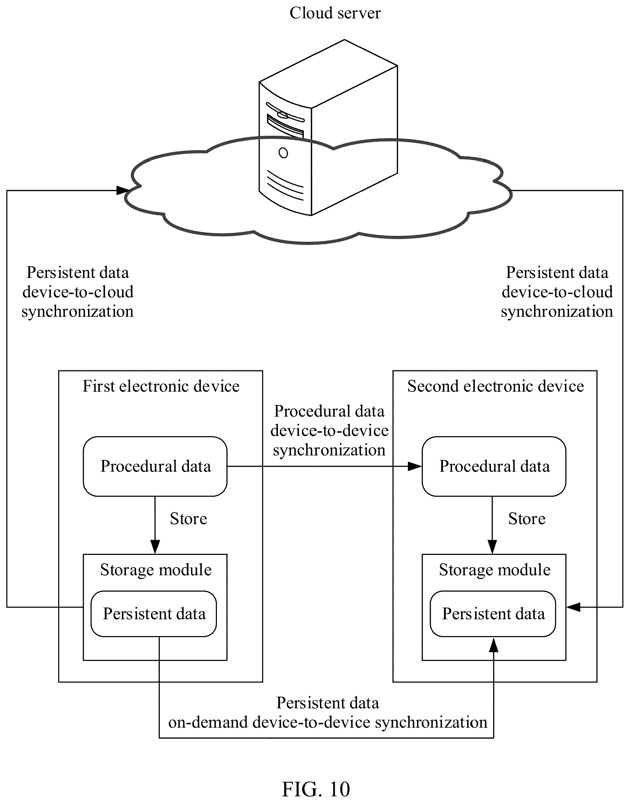

Therefore, as shown in FIG. 10, data synchronization between different devices may be flexibly implemented between the first electronic device and the second electronic device based on the data type and a current data synchronization scenario in a plurality of data synchronization modes such as procedural data device-to-device synchronization, persistent data device-to-cloud synchronization, and persistent data on-demand device-to-device synchronization.

In some embodiments, data synchronization is performed between different electronic devices in a plurality of manners. In addition to ensuring data consistency between the plurality of devices, repeated data synchronization also needs to be avoided.

In some examples, the electronic device determines consistency and repeatability of data synchronization through data comparison.

For example, after obtaining synchronized data in the device-to-device synchronization mode or the device-to-cloud synchronization mode, the second electronic device compares the synchronized data with local data, to determine whether same data has been stored locally. If the same data has been stored locally, the second electronic device may discard the synchronized data. If the same data is not stored locally, the second electronic device may save the synchronized data.

For example, as shown in FIG. 10, in a process of running the notes application, the first electronic device generates, in response to a user operation, procedural data of the notes application, and synchronizes the procedural data to the nearby second electronic device in the device-to-device synchronization mode. The second electronic device obtains and saves the procedural data. Subsequently, the first electronic device saves the procedural data of the notes application to the storage module in response to a save operation of the user, and obtains persistent data of the notes application. Then, the first electronic device uploads the persistent data of the notes application to the cloud server. Correspondingly, the second electronic device requests, from the cloud server, to download the persistent data of the notes application. The persistent data of the notes application may include the procedural data that is of the notes application and that is previously obtained by the first electronic device and the second electronic device in the device-to-device synchronization mode. Therefore, the second electronic device may determine, through data comparison, whether a part or all of the persistent data obtained from the cloud server needs to be reserved.

For example, in a device-to-device synchronization process, the second electronic device obtains three pictures that are input by the user to the notes application, and obtains editing time of the three pictures. Subsequently, the persistent data that is of the notes application and that is downloaded by the second electronic device from the cloud server includes five pictures input by the user and editing time of the five pictures. The second electronic device may determine, based on the pictures and the editing time, that after device-to-device synchronization, the first electronic device inserts two pictures into the notes application based on a user operation. Therefore, the second electronic device may reserve the two newly added pictures, and discard the three pictures repeatedly downloaded from the cloud server. Alternatively, the second electronic device determines, based on the pictures and the editing time, that the user edits the three pictures that have been synchronized after device-to-device synchronization. In this case, the second electronic device may discard the three pictures on which device-to-device synchronization is performed, and retain all the five pictures synchronized from the cloud server.

In this way, a data conflict between different devices is avoided while consistency between data in the second electronic device and data in the first electronic device is ensured.

For another example, as shown in FIG. 10, in a process of running the notes application, the first electronic device inserts a picture and a video into the notes application in response to an edit operation of the user. After detecting a save operation of the user for the notes application, the first electronic device saves persistent data of the notes application to the storage module. Then, the first electronic device determines that the cloud synchronization function is not enabled currently, detects the nearby second electronic device, and may synchronize the persistent data of the notes application to the second electronic device in the device-to-device synchronization mode based on a requirement. Subsequently, when detecting that the user enables the cloud synchronization function, the first electronic device may upload, to the cloud server, the persistent data that is of the notes application and that is not uploaded to the cloud server.

For example, after downloading the persistent data of the notes application from the cloud server, the second electronic device determines that the persistent data has been synchronized to the first electronic device in the device-to-device synchronization mode. In this case, the second electronic device may avoid synchronizing the repeated data again.

For another example, in a process of synchronizing the persistent data with the second electronic device in a device-to-device manner based on a requirement, the first electronic device determines that an amount of newly added picture data in the notes application is small, and may directly perform attachment synchronization in the device-to-device synchronization mode; and the first electronic device determines that an amount of newly added video data in the notes application is large, and may synchronize a video URL in the device-to-device synchronization mode. Subsequently, after obtaining persistent data of the notes application from the cloud server, the second electronic device may discard a picture that has been synchronized, and save a video whose attachment content is not synchronized.

In this way, the second electronic device pulls data from the cloud server based on a requirement and an actual data synchronization status.

In some other examples, the electronic device determines consistency and repeatability of data synchronization by comparing data information.

For example, the second electronic device determines, by comparing data editing time, whether editing time of data in the cloud server is later than editing time of local application data. Therefore, the second electronic device can download only latest to-be-synchronized data, and does not need to repeatedly download historical data. This effectively reduces power consumption of data downloading and data synchronization time. To be specific, the second electronic device first determines editing time of the to-be-synchronized data, and downloads an attachment from the cloud server based on a requirement. When the attachment does not change, the attachment does not need to be repeatedly downloaded.

For example, as shown in FIG. 10, in a process of running the notes application, the first electronic device generates procedural data of the notes application in response to an edit operation of the user, and synchronizes the procedural data to the nearby second electronic device in the device-to-device synchronization mode. The second electronic device obtains and saves the procedural data. Subsequently, the first electronic device saves the procedural data of the notes application to the storage module in response to a save operation of the user, and obtains persistent data of the notes application. Then, the first electronic device uploads the persistent data of the notes application to the cloud server.

Then, the second electronic device sends a data synchronization request to the cloud server in response to an operation of starting the notes application by the user, where the data synchronization request carries an identifier of the notes application. Correspondingly, the cloud server receives the data synchronization request, and determines, based on the identifier of the notes application carried in the data synchronization request, that the second electronic device requests to synchronize data of the notes application. The cloud server may determine, based on data of the notes application that is uploaded by the first electronic device and obtained between last data synchronization and current data synchronization of the second electronic device, the data as to-be-synchronized data, and send information about the to-be-synchronized data to the second electronic device. Alternatively, the cloud server directly determines all data of the notes application as to-be-synchronized data, and sends information about the to-be-synchronized data to the second electronic device.

Correspondingly, after receiving the information about the to-be-synchronized data sent by the cloud server, the second electronic device compares the information about the to-be-synchronized data with local data information of the notes application, determines data that actually needs to be synchronized, and sends a data synchronization request to the cloud server again, where the data synchronization request carries information about the data that actually needs to be synchronized. Correspondingly, after receiving the data synchronization request, the cloud server delivers the corresponding to-be-synchronized data to the second electronic device based on the information that is about the data and that is carried in the data synchronization request.

In this way, the second electronic device implements data synchronization with the first electronic device, avoids downloading repeated attachment data, and improves efficiency of device-to-cloud data synchronization.

For another example, in a process of running the notes application, the first electronic device updates content of the notes application in response to a user operation, and sends updated note content to the second electronic device in the device-to-device synchronization mode. If the second electronic device is also running the notes application, the first electronic device and the second electronic device may synchronously display the notes application content edited by the user; or the second electronic device does not run the notes application, and may also save the obtained note content. Subsequently, the first electronic device uploads updated content and update time of the notes application to the cloud server in response to an operation of saving the notes application by the user. When requesting, from the cloud server, to synchronize the data of the notes application, if last update time (for example, equal to time at which the note content is uploaded to the cloud server) of the note content fed back by the cloud server is earlier than synchronization time of the locally stored note content, the second electronic device may determine that the note content does not need to be synchronized with the cloud server.

In this way, the second electronic device determines, by comparing final update time of the to-be-synchronized data, whether data synchronization needs to be performed. This effectively improves data synchronization efficiency.

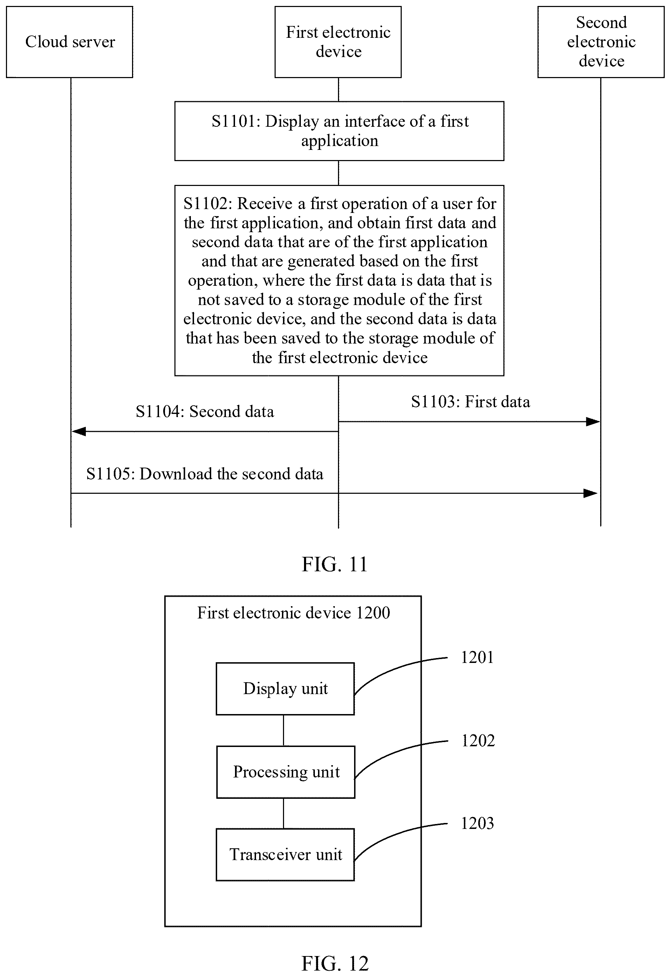

FIG. 11 is a schematic flowchart of a data synchronization method according to an embodiment of this application. It should be noted that the method is not limited to a specific sequence in FIG. 11 and below. It should be understood that, in another embodiment, sequences of some steps in the method may be mutually exchanged based on an actual requirement, or some steps in the method may be omitted or deleted. The method includes the following steps.

S1101: A first electronic device displays an interface of a first application.

In some embodiments, the first electronic device runs the first application in the foreground, and displays the interface of the first application. In a process of displaying the interface of the first application, the first electronic device may receive a user operation, and data of the first application may be generated based on the user operation.

S1102: The first electronic device receives the first operation of the user for the first application, and obtains first data and second data that are of the first application and that are generated based on the first operation. The first data is data that is not saved to a storage module of the first electronic device, and the second data is data that has been saved to the storage module of the first electronic device.

The first data is procedural data that is not saved to the storage model, and the second data is persistent data that has been saved to the storage module. Optionally, the storage module is a storage medium that can store data. The storage module is, for example, a ROM, for example, a hard disk, a hard disk drive, a solid-state drive, or a magnetic disk.

In some embodiments, the first application may generate the data of the first application when detecting the first operation of the user. For example, the first operation is an edit operation, and the first application may generate the procedural data based on the edit operation of the user. For another example, the first operation is a save operation, and the first application saves the second data to the storage module based on the user operation. In this case, the second data is the persistent data.

In some examples, in a running process of the first application, the procedural data and/or the persistent data may be generated.

S1103: The first electronic device sends the first data to a second electronic device.

S1104: The first electronic device sends the second data to a cloud server.

In some embodiments, after obtaining the first data that is of the first application and that is generated based on the first operation, the first electronic device directly sends the first data to the second electronic device. The second electronic device is an electronic device near the first electronic device, and a short-range communication connection is established between the first electronic device and the second electronic device.

In some examples, the first electronic device sends the first data to the second electronic device in a short-range communication mode. Correspondingly, the second electronic device receives the first data sent by the first electronic device in the short-range communication mode. The short-range communication mode includes at least one of a Bluetooth P2P communication mode, a Wi-Fi P2P communication mode, and a local area network communication mode.

In some embodiments, after obtaining the second data that is of the first application and that is generated based on the first operation, the first electronic device uploads the second data to the cloud server, so that another electronic device downloads the second data.

It should be understood that an execution sequence of S1103 and S1104 is not limited in embodiments of this application.

S1105: The second electronic device downloads the second data from the cloud server.

In some embodiments, the second electronic device obtains first data information of third data sent by the cloud server, where the third data includes the second data and data that is in the first data and that has been saved to the storage module. The second electronic device requests, based on the first data information from the cloud server, to download the second data that is in the third data and that is not synchronized to the first electronic device in a device-to-device manner.

In this way, the second electronic device may request, based on a requirement, data synchronization from the cloud server, and the second electronic device may pull, from the cloud server, data that is not synchronized with another electronic device. Therefore, a data download amount is reduced, and the second electronic device may obtain latest application data.

In some embodiments, the first electronic device receives a data save operation of the user or detects that a data save cycle is met, and saves the first data to the storage module. The first electronic device sends the first data in the storage module to the cloud server.

For example, the first electronic device saves the procedural data to the storage module in response to a user operation. In this case, the procedural data becomes the persistent data. The first electronic device sends the persistent data to the cloud server based on a preset cycle or after determining that the persistent data is obtained.

For another example, the first application is configured with an automatic save function, and the first application automatically saves the procedural data based on a preset cycle. In this case, after obtaining persistent data that is newly saved to the storage module, the first electronic device may send the persistent data to the cloud server.

In this way, the first electronic device classifies the procedural data and the persistent data based on whether the data is saved, and synchronizes the procedural data and the persistent data in different manners. Therefore, stability of data synchronization is ensured while ensuring timeliness of data synchronization.

For example, as shown in FIG. 10, in a process of running the first application (for example, a notes application), the first electronic device generates, in response to a user operation, procedural data of the notes application, and synchronizes the procedural data to the nearby second electronic device in a device-to-device synchronization mode. The second electronic device obtains and saves the procedural data. Subsequently, the first electronic device saves the procedural data of the notes application to the storage module in response to a save operation of the user, and obtains persistent data of the notes application. Then, the first electronic device uploads the persistent data of the notes application to the cloud server. Correspondingly, the second electronic device requests, from the cloud server, to download the persistent data of the notes application. The persistent data of the notes application may include the procedural data that is of the notes application and that is previously obtained by the first electronic device and the second electronic device in the device-to-device synchronization mode. Therefore, the second electronic device may determine, through data comparison, whether a part or all of the persistent data obtained from the cloud server needs to be reserved.

In this way, a data conflict between different devices is avoided while consistency between data in the second electronic device and data in the first electronic device is ensured.

In some embodiments, the first electronic device receives a second operation of the user for the first application, and obtains fourth data that is of the first application and that is generated based on the second operation, where the fourth data is data that has been saved to the storage module. The first electronic device sends the fourth data to the second electronic device under a preset condition. Correspondingly, the second electronic device receives the fourth data sent by the second electronic device under the preset condition. The preset condition includes one or more of the following: sending the fourth data to the cloud server fails, a cloud synchronization function is not enabled, a cloud space capacity is insufficient, and a priority of device-to-device synchronization is higher than a priority of device-to-cloud synchronization.

For example, as shown in FIG. 10, in a process of running the notes application, the first electronic device inserts a picture and a video into the notes application in response to an edit operation of the user. After detecting a save operation of the user for the notes application, the first electronic device saves persistent data of the notes application to the storage module. Then, the first electronic device determines that the cloud synchronization function is not enabled currently, detects the nearby second electronic device, and may synchronize the persistent data of the notes application to the second electronic device in the device-to-device synchronization mode based on a requirement. Subsequently, when detecting that the user enables the cloud synchronization function, the first electronic device may upload, to the cloud server, the persistent data that is of the notes application and that is not uploaded to the cloud server.

In this way, data synchronization between different devices may be flexibly implemented between the first electronic device and the second electronic device based on a data type and a current data synchronization scenario in a plurality of data synchronization modes such as procedural data device-to-device synchronization, persistent data device-to-cloud synchronization, and persistent data on-demand device-to-device synchronization.

In some embodiments, the second electronic device receives second data information of fifth data sent by the cloud server, where the fifth data is data that is of the first application and that is sent by the first electronic device to the cloud server. The second electronic device requests, based on the second data information from the cloud server, to download sixth data that is in the fifth data and that is not synchronized to the first electronic device in a device-to-device manner, where the sixth data does not include the fourth data.

In this way, the second electronic device pulls data from the cloud server based on an actual data synchronization status and a requirement, and does not need to repeatedly download data that has been synchronized.

In some embodiments, the first electronic device receives a third operation of the user for the first application, and obtains seventh data that is of the first application and that is generated based on the third operation, where the seventh data is data that has been saved to the storage module, and a data amount of the seventh data is greater than a preset threshold. The first electronic device sends first information of the seventh data to the second electronic device under the preset condition. The first information includes a storage address and/or thumbnail information of the seventh data. Correspondingly, the second electronic device receives the first information that is of the seventh data and that is sent by the first electronic device under the preset condition.

For example, in a process of synchronizing the persistent data with the second electronic device in a device-to device manner based on a requirement, the first electronic device determines that an amount of newly added picture data in the notes application is small, and may directly perform attachment synchronization in the device-to-device synchronization mode; and the first electronic device determines that an amount of newly added video data in the notes application is large, and may synchronize a video URL in the device-to-device synchronization mode. Subsequently, after obtaining persistent data of the notes application from the cloud server, the second electronic device may discard a picture that has been synchronized, and save a video whose attachment content is not synchronized.

In this way, the first electronic device may synchronize the persistent data with the second electronic device in a device-to-device manner based on a data amount status. Therefore, device-to-device synchronization efficiency of the persistent data is improved.

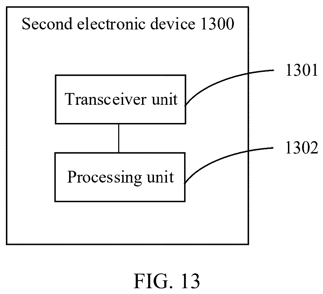

The foregoing describes in detail the data synchronization method provided in embodiments of this application with reference to FIG. 6 to FIG. 11. The following describes in detail the first electronic device and the second electronic device provided in embodiments of this application with reference to FIG. 12 and FIG. 13.

In a possible design, FIG. 12 is a diagram of a structure of a first electronic device according to an embodiment of this application. As shown in FIG. 12, the first electronic device 1200 may include a display unit 1201, a processing unit 1202, and a transceiver unit 1203. The first electronic device 1200 may be configured to implement functions of the first electronic device in the foregoing method embodiments.

Optionally, the display unit 1201 is configured to support the first electronic device 1200 in displaying interface content; and/or support the first electronic device 1200 in performing S1101 in FIG. 11.

Optionally, the processing unit 1202 is configured to support the first electronic device 1200 in performing S1102 in FIG. 11.

Optionally, the transceiver unit 1203 is configured to support the first electronic device 1200 in performing S1103 and S1104 in FIG. 11.

The transceiver unit may include a receiving unit and a sending unit, may be implemented by a transceiver or a transceiver-related circuit component, and may be a transceiver or a transceiver module. Operations and/or functions of the units in the first electronic device 1200 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the first electronic device 1200 shown in FIG. 12 may further include a storage unit (not shown in FIG. 12), and the storage unit stores a program or instructions. When the display unit 1201, the processing unit 1202, and the transceiver unit 1203 execute the program or the instructions, the first electronic device 1200 shown in FIG. 12 is enabled to perform the data synchronization method in the foregoing method embodiments.

For technical effect of the first electronic device 1200 shown in FIG. 12, refer to the technical effect of the data synchronization method in the foregoing method embodiments. Details are not described herein again.

In addition to being in a form of the first electronic device 1200, the technical solution provided in this application may alternatively be a functional unit or a chip in the first electronic device, or an apparatus that matches the first electronic device for use.

In a possible design, FIG. 13 is a diagram of a structure of a second electronic device according to an embodiment of this application. As shown in FIG. 13, the second electronic device 1300 may include a transceiver unit 1301 and a processing unit 1302. The second electronic device 1300 may be configured to implement functions of the second electronic device in the foregoing method embodiments.

Optionally, the transceiver unit 1301 is configured to support the second electronic device 1300 in performing S1103 and S1105 in FIG. 11.

Optionally, the processing unit 1302 is configured to support the second electronic device 1300 in comparing data received from a first electronic device with data downloaded from a cloud server, to determine to synchronize data that is not repeated.

The transceiver unit may include a receiving unit and a sending unit, may be implemented by a transceiver or a transceiver-related circuit component, and may be a transceiver or a transceiver module. Operations and/or functions of the units in the second electronic device 1300 are separately used to implement corresponding procedures of the data synchronization method in the foregoing method embodiments. All related content of the steps in the foregoing method embodiments may be cited in function descriptions of corresponding functional units. For brevity, details are not described herein again.

Optionally, the second electronic device 1300 shown in FIG. 13 may further include a storage unit (not shown in FIG. 13), and the storage unit stores a program or instructions. When the transceiver unit 1301 and the processing unit 1302 execute the program or the instructions, the second electronic device 1300 shown in FIG. 13 is enabled to perform the data synchronization method in the foregoing method embodiments.

For technical effect of the second electronic device 1300 shown in FIG. 13, refer to the technical effect of the data synchronization method in the foregoing method embodiments. Details are not described herein again. In addition to being in a form of the second electronic device 1300, the technical solution provided in this application may alternatively be a functional unit or a chip in the second electronic device, or an apparatus that matches the second electronic device for use.

An embodiment of this application further provides a chip system, including a processor. The processor is coupled to a memory. The memory is configured to store a program or instructions. When the program or the instructions are executed by the processor, the chip system is enabled to implement the method in any one of the foregoing method embodiments.

Optionally, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system-on-a-chip (system-on-a-chip, SoC), a central processing unit (central processing unit, CPU), a network processor (network processor, NP), a digital signal processing circuit (digital signal processor, DSP), a microcontroller unit (microcontroller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the methods disclosed with reference to embodiments of this application may be directly performed and completed by a hardware processor, or may be performed and completed by using a combination of hardware in the processor and a software module.

An embodiment of this application further provides a computer-readable storage medium. The computer-readable storage medium stores a computer program. When the computer program is run on a computer, the computer is enabled to perform the foregoing related steps, to implement the data synchronization method in the foregoing embodiments.

An embodiment of this application further provides a computer program product. When the computer program product runs on a computer, the computer is enabled to perform the foregoing related steps, to implement the data synchronization method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the data synchronization method in the foregoing method embodiments.

The apparatus, the computer-readable storage medium, the computer program product, or the chip provided in embodiments of this application is configured to perform the corresponding method provided above. Therefore, for beneficial effect that can be achieved by the apparatus, the computer-readable storage medium, the computer program product, or the chip, refer to the beneficial effect of the corresponding method provided above. Details are not described herein again.

Methods or algorithm steps described in combination with the content disclosed in embodiments of this application may be implemented by hardware, or may be implemented by a processor by executing a software instruction. The software instructions may include corresponding software modules. The software modules may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk drive, a removable hard disk drive, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

Based on the descriptions of the foregoing implementations, a person skilled in the art may clearly understand that, for a purpose of convenient and brief description, division into the foregoing functional modules is merely used as an example for description. During actual application, the foregoing functions may be allocated to different functional modules and completed based on a requirement. In other words, an inner structure of the apparatus is divided into different functional modules to complete all or some of the functions described above. For a detailed working process of the foregoing system, apparatus, and unit, refer to a corresponding process in the foregoing method embodiment. Details are not described herein again. In the several embodiments provided in this application, it should be understood that the disclosed method may be implemented in other manners. The apparatus embodiment described above is merely an example. For example, division into the modules or units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the modules or units may be implemented in electrical, mechanical, or other forms. In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The computer-readable storage medium includes but is not limited to any one of the following: any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data synchronization system, wherein the system comprises a first electronic device and a second electronic device, and a short-range communication connection is established between the first electronic device and the second electronic device;
the first electronic device is configured to:
display an interface of a first application;
receive a first operation of a user for the first application, and obtain first data and second data that are of the first application and that are generated based on the first operation, wherein the first data is data that is not saved to a storage module of the first electronic device, and the second data is data that has been saved to the storage module; and
send the first data to the second electronic device, and send the second data to a cloud server; and
the second electronic device is configured to:
receive the first data sent by the first electronic device, and download the second data from the cloud server.

2. The system according to claim 1, wherein
the second electronic device is further configured to: obtain first data information of third data sent by the cloud server, wherein the third data comprises the second data and data that is in the first data and that has been saved to the storage module; and
request, based on the first data information from the cloud server, to download the second data that is in the third data and that is not synchronized to the first electronic device in a device-to-device manner.

3. The system according to claim 1 or 2, wherein
the first electronic device is further configured to:
receive a second operation of the user for the first application, and obtain fourth data that is of the first application and that is generated based on the second operation, wherein the fourth data is data that has been saved to the storage module; and
send the fourth data to the second electronic device under a preset condition, wherein the preset condition comprises one or more of the following: sending the fourth data to the cloud server fails, a cloud synchronization function is not enabled, a cloud space capacity is insufficient, and a priority of device-to-device synchronization is higher than a priority of device-to-cloud synchronization; and
the second electronic device is further configured to:
receive the fourth data sent by the first electronic device.

4. The system according to claim 3, wherein
the second electronic device is further configured to:
receive second data information of fifth data sent by the cloud server, wherein the fifth data is data that is of the first application and that is sent by the first electronic device to the cloud server; and
request, based on the second data information from the cloud server, to download sixth data that is in the fifth data and that is not synchronized to the first electronic device in a device-to-device manner, wherein the sixth data does not comprise the fourth data.

5. A data synchronization method, applied to a first electronic device, wherein the method comprises:
displaying an interface of a first application;
receiving a first operation of a user for the first application, and obtaining first data and second data that are of the first application and that are generated based on the first operation, wherein the first data is data that is not saved to a storage module of the first electronic device, and the second data is data that has been saved to the storage module; and
sending the first data to a second electronic device, and sending the second data to a cloud server.

6. The method according to claim 5, wherein sending the first data to the second electronic device comprises:
sending the first data to the second electronic device in a short-range communication mode, wherein the short-range communication mode comprises at least one of a Bluetooth point-to-point P2P connection communication mode, a wireless fidelity Wi-Fi P2P communication mode, and a local area network communication mode.

7. The method according to claim 5 or 6, wherein the method further comprises:
receiving a second operation of the user for the first application, and obtaining fourth data that is of the first application and that is generated based on the second operation, wherein the fourth data is data that has been saved to the storage module; and
sending the fourth data to the second electronic device under a preset condition, wherein the preset condition comprises one or more of the following: sending the fourth data to the cloud server fails, a cloud synchronization function is not enabled, a cloud space capacity is insufficient, and a priority of device-to-device synchronization is higher than a priority of device-to-cloud synchronization.

8. The method according to claim 7, wherein the method further comprises:
receiving a third operation of the user for the first application, and obtaining seventh data that is of the first application and that is generated based on the third operation, wherein the seventh data is data that has been saved to the storage module, and a data amount of the seventh data is greater than a preset threshold; and
sending first information of the seventh data to the second electronic device under the preset condition, wherein the first information comprises a storage address and/or thumbnail information of the seventh data.

9. The method according to any one of claims 5 to 8, wherein the method further comprises:
receiving a data save operation of the user or detecting that a data save cycle is met, and saving the first data to the storage module; and
sending the first data in the storage module to the cloud server.

10. A data synchronization method, applied to a second electronic device, wherein the method comprises:
receiving first data sent by a first electronic device; and
downloading, from a cloud server, second data sent by the first electronic device to the cloud server, wherein the first data and the second data are data generated by a first application in the first electronic device, the first data is data that is not saved to a storage module of the first electronic device, and the second data is data that has been saved to the storage module of the first electronic device.

11. The method according to claim 10, wherein receiving the first data sent by the first electronic device comprises:
receiving the first data sent by the first electronic device in a short-range communication mode, wherein the short-range communication mode comprises at least one of a Bluetooth point-to-point P2P connection communication mode, a wireless fidelity Wi-Fi P2P communication mode, and a local area network communication mode.

12. The method according to claim 10 or 11, wherein downloading, from the cloud server, the second data sent by the first electronic device to the cloud server comprises:
obtaining first data information of third data sent by the cloud server, wherein the third data comprises the second data and data that is in the first data and that has been saved to the storage module; and
requesting, based on the first data information from the cloud server, to download the second data that is in the third data and that is not synchronized to the first electronic device in a device-to-device manner.

13. The method according to any one of claims 10 to 12, wherein the method further comprises:
receiving fourth data sent by the first electronic device under a preset condition, wherein the fourth data is data that has been saved to the storage module by the first electronic device; and the preset condition comprises one or more of the following: the first electronic device fails to send the fourth data to the cloud server, the first electronic device does not enable a cloud synchronization function, a cloud space capacity is insufficient, and a priority of device-to-device synchronization is higher than a priority of device-to-cloud synchronization.

14. The method according to claim 13, wherein the method further comprises:
receiving second data information of fifth data sent by the cloud server, wherein the fifth data is data that is of the first application and that is sent by the first electronic device to the cloud server; and
requesting, based on the second data information from the cloud server, to download sixth data that is in the fifth data and that is not synchronized to the first electronic device in a device-to-device manner, wherein the sixth data does not comprise the fourth data.

15. The method according to claim 13 or 14, wherein the method further comprises:
receiving first information of seventh data sent by the first electronic device under the preset condition, wherein the seventh data is data that has been saved to the storage module by the first electronic device, a data amount of the seventh data is greater than a preset threshold, and the first information comprises a storage address and/or thumbnail information of the seventh data.

16. An electronic device, comprising a processor, a memory, and a display, wherein the memory and the display are coupled to the processor, the memory is configured to store computer program code, the computer program code comprises computer instructions, and when the processor reads the computer instructions from the memory, the electronic device is enabled to perform the method according to any one of claims 5 to 9.

17. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 10 to 15.

18. A computer-readable storage medium, wherein the computer-readable storage medium comprises a computer program, and when the computer program is run on an electronic device, the electronic device is enabled to perform the method according to any one of claims 5 to 9, or the electronic device is enabled to perform the method according to any one of claims 10 to 15.

19. A computer program product, wherein when the computer program product runs on a computer, the computer is enabled to perform the method according to any one of claims 5 to 9, or the computer is enabled to perform the method according to any one of claims 10 to 15.
